# EUROPEAN PATENT SPECIFICATION

(11) **EP 4 230 013 B1**
(45) Date of publication and mention of the grant of the patent: **02.12.2026**
(21) Application number: 21880455.7
(22) Date of filing: 12.10.2021
(51) Int. Cl.: A01G 9/24, A01G 9/029, A01C 1/04

(54) **SEED PACKAGE FOR PLANT CULTIVATION APPARATUS AND PLANT CULTIVATION APPARATUS COMPRISING SAME**
SAMENVERPACKUNG FÜR PFLANZENZUCHTVORRICHTUNG UND PFLANZENZUCHTVORRICHTUNG DAMIT
EMBALLAGE DE GRAINES POUR APPAREIL DE CULTURE DE PLANTES ET APPAREIL DE CULTURE DE PLANTES LE COMPRENANT

(30) Priority: 16.10.2020 KR 20200134144
(43) Date of publication of application: 23.08.2023
(73) Proprietor: LG Electronics Inc., Yeongdeungpo-gu Seoul 07336 (KR)
(72) Inventor: KIM, Eunjeong, Seoul 08592 (KR); LEE, Soobeom, Seoul 08592 (KR); KIM, Kyounglan, Seoul 08592 (KR); YI, Myeongha, Seoul 08592 (KR); KIM, Deokhoon, Seoul 08592 (KR)
(74) Representative: Vossius & Partner Patentanwälte Rechtsanwälte mbB
(86) International application number: PCT/KR2021/014001
(87) International publication number: WO 2022/080808

(56) References cited:
- DE-T2- 69 709 807
- JP-A- 2000 300 095
- JP-A- 2000 300 095
- JP-A- H09 275 831
- KR-A- 20200 100 499
- KR-A- 20200 110 044
- KR-B1- 100 253 559
- US-A1- 2009 019 765
- US-A1- 2020 146 231
- US-A1- 2020 260 659

## Description

The present disclosure relates to a seed package for a plant cultivation apparatus and a plant cultivation apparatus including the same.

A general plant cultivation apparatus forms a predetermined cultivation chamber having an environment suitable for the growth of plants, and stores the plants inside the predetermined cultivation chamber. The plant cultivation apparatus is provided with a configuration for supplying nutrients and light energy necessary for plant growth, and plants grow by the supplied nutrients and light energy.

A plant cultivation apparatus according to the prior art is disclosed in Korean Patent Publication No. 10-2019-0028218. In such a prior art, in the plant cultivation apparatus, a cover on which a plant cultivation port is mounted inside a box-shaped main body, a culture medium supply passage for supplying a culture medium to the plant cultivation port, and a water storage tray for storing the culture medium are provided, and the upper portion thereof is provided a structure for disposing an LED lighting device for promoting plant growth is disclosed.

In such a plant cultivation pot, soil such as culture soil is included. Since an environment in which temperature, humidity, and light for plant growth are maintained is a good environment for mold to inhabit, bacteria or mold may be generated in the soil in the plant cultivation pot.

Due to such bacteria or fungi, the inside of the plant cultivation apparatus may be contaminated during the plant growth process, and there is a problem in that the plant growth may be adversely affected.

KR 2020 0110044 A relates to a plat container. US 2020/260659 A1 relates to an apparatus for cultivating plants. US 2020/146231 A1 relates to a plant cultivating apparatus. JP 2000 300095 A relates to a float for hydroponic. DE 697 09 807 T2 relates to a watery gel medium for plant cultivation.

### [Technical Problem]

An object of the present disclosure is to provide a plant cultivation apparatus capable of maintaining a clean state without propagation of bacteria and mold by providing a seed package that does not contain culture soil.

In addition, an object of the present disclosure is to provide a seed package capable of evenly supplying water provided in a water supply space in a plant cultivation apparatus to the entire pod, and a plant cultivation apparatus including the same.

### [Technical Solution]

The seed package according to an embodiment of the present disclosure includes a seed accommodation member accommodating seeds, and a container forming a space accommodating the seed accommodation member, in which a water inlet into which water is introduced is provided in the bottom surface of the container.

The invention is defined by independent claim 1. Further embodiments of the invention are defined by the dependent claims. A seed package according to an embodiment of the present disclosure includes a seed accommodation member replaceably mountable in a cultivation space of a plant cultivation apparatus and formed of a material capable of absorbing moisture while accommodating the cultivation seeds therein; a container forming a space for accommodating the seed accommodation member; a container cover shielding the open upper surface of the container; and a shielding member provided inside the container and made of a structure through which water can pass, in which the container includes a bottom surface and a circumferential surface extending upward along the circumference of the bottom surface, in the bottom surface, a recessed portion formed by being recessed and a water inlet spaced apart from the recessed portion and opened to allow water to flow into the container are formed, and the water inlet and the shielding member are disposed so that at least a portion thereof overlaps.

The water inlet may be formed in a plurality on both sides based on the recessed portion and be formed long along the bottom surface.

The container may include an extension portion formed by being recessed in the bottom surface and connecting the recessed portion and both side ends of the bottom surface.

The container may include a spacer protruding downward from the bottom surface.

The seed accommodation member is disposed within the shielding member region.

A plurality of seed accommodation members is disposed in the front and rear direction based on the recessed portion.

At least some of the plurality of seed accommodation members may be disposed on the same extension line as the water inlet in the vertical direction.

At least some of the plurality of seed accommodation members may be is disposed so as not to overlap each other with the water inlet.

The seed accommodation member may include a seed accommodation groove accommodating the seed.

The seed accommodation member may include a fine hole extending downward from the lower end of the seed accommodation groove and formed smaller than the diameter of the seed accommodation groove.

The seed accommodation groove may have a lower end spaced upward from the bottom surface of the container.

The seed accommodation member may further include a cover member shielding the upper surface of the seed accommodation groove.

The seed accommodation member may further include a filler filling the inner space of the seed accommodation groove.

The container cover may include a cover plate shielding the open upper surface of the container; and an accommodation member mounting portion which protrudes downward from the lower surface of the container cover, has an insertion hole opened at the lower end thereof, and into which the upper end of the seed accommodation member is inserted.

The container cover may include a cover hole formed on an upper surface of the cover plate and formed to communicate with the insertion hole.

The seed package may further include a reflective sheet attached to an upper surface of the container cover and capable of reflecting light.

The seed package may further include a cover sheet which is provided above the container cover and on which the type of crop being cultivated is indicated.

The seed package may further include a shielding sheet provided above the container cover and including an opening hole formed at a position corresponding to the seed accommodation member.

A plant cultivation apparatus according to an embodiment of the present disclosure includes a cabinet forming spaces in which plants are cultivated; a seed packages including cultivation seeds for cultivating therein; a cultivation shelf which is disposed in the cultivation space and on which the seed package is seated; a machine room provided with a compressor and a condenser that perform a refrigeration cycle for temperature control of the cultivation space; in which the seed package includes a seed accommodation member replaceably mounted in the cultivation space of the plant cultivation apparatus and formed of a material capable of absorbing moisture while accommodating the cultivation seeds therein; a container forming an accommodation space accommodating the seed accommodation member; a container cover for shielding the open upper surface of the container; and a shielding member provided inside the container and made of a structure through which water can pass, the container includes a bottom surface and a circumferential surface extending upward along the circumference of the bottom surface, in the bottom surface, a recessed portion formed by being recessed and a water inlet spaced apart from the recessed portion and opened to allow water to flow into the container are formed, and the water inlet and the shielding member are disposed so that at least a portion thereof overlaps.

The cultivation shelf may include a seating portion which is disposed in a plurality while being spaced apart in the vertical direction inside the cabinet, recessed downward, and on which the seed package is seated; and a water supply portion formed on the seating portion and supplying water into the seed package, and in which the lower surface of the recessed portion may accommodate the water supply portion.

### [Advantageous Effect]

Seed packages for plant cultivation apparatus according to an embodiment of the present disclosure and plant cultivation apparatus including the same can expect the following effects.

The plant cultivation apparatus according to an embodiment of the present disclosure has an advantage of not requiring culture soil for plant cultivation by using a seed package including a seed accommodation member. Therefore, there is an effect of improving the cleanliness of the plant cultivation apparatus, since it is possible to prevent mold and the like from being generated due to culture soil or the like.

In addition, there is an advantage in that the water inlet through which water is supplied is formed long in the left and right direction on the bottom surface of the container in which the seed accommodation member is seated, so that the seed accommodation member can be uniformly supplied with water regardless of the position where the seed accommodation member is seated in the container.

**In** addition, the water inlet is spaced apart from the recessed portion accommodating the water supply portion at a set interval. Accordingly, it is possible to prevent the roots of the plant from passing through the water inlet and blocking the water supply portion.

A bottom surface of the container includes a spacer protruding downward. The spacer provides a space spaced apart from the bottom surface of the container by a set distance when the seed package is seated on the seating portion of the cultivation shelf. Therefore, there is an advantage in securing a flow path through which the water supplied to the cultivation shelf flows through the water inlet.

**In** addition, the bottom surface of the container includes a shielding member between the seed accommodation member and the water inlet. The shielding member may prevent roots of plants or foreign matters from passing through the water inlet and being caught in the water supply portion of the plant cultivation apparatus.

### [Description of Drawings]

FIG. 1 is a perspective view illustrating a plant cultivation apparatus according to an embodiment of the present disclosure.
FIG. 2 is a perspective view illustrating a state where the door of the plant cultivation apparatus is opened.
FIG. 3 is a perspective view illustrating a seed package according to an embodiment of the present disclosure.
FIG. 4 is an exploded perspective view illustrating a state where the seed package is viewed from above.
FIG. 5 is an exploded perspective view illustrating a state where the seed package is viewed from below.
FIG. 6 is an exploded perspective view illustrating the cultivation shelf and the seed package.
FIG. 7 is a view illustrating a state where the container is viewed from above.
FIG. 8 is a view illustrating a state where the container is viewed from below.
FIG. 9 is a cross-sectional view taken along line IX-IX' of FIG. 3.
FIG. 10 is a cutaway perspective view illustrating a state where plants are grown in the seed package.
FIG. 11 is a cross-sectional view illustrating the seed accommodation member according to the first embodiment.
FIG. 12 is a cross-sectional view illustrating a seed accommodation member according to a second embodiment.
FIG. 13 is a cross-sectional view illustrating a seed accommodation member according to a third embodiment.
FIG. 14 is a cross-sectional view illustrating a seed accommodation member according to a fourth embodiment.
FIG. 15 is a cross-sectional view illustrating a seed accommodation member according to a fifth embodiment.
FIG. 16 is a cross-sectional view illustrating a seed accommodation member according to a sixth embodiment.
FIG. 17 is a view illustrating a state where the inside of a seed package according to another embodiment of the present disclosure is viewed from above.

### [Best Mode]

Hereinafter, specific embodiments of the present disclosure will be described in detail with drawings.

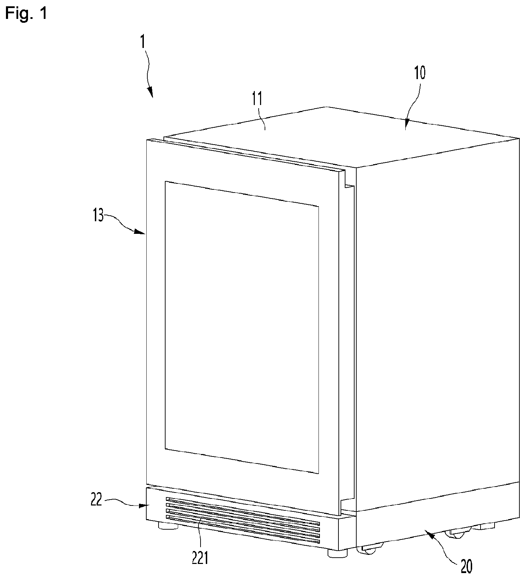

Define direction before description. In an embodiment of the present disclosure described below, unless a separate direction is defined, the direction of the front of the door illustrated in FIG. 1 may be defined as forward, the direction toward the cabinet based on the front of the door may be defined as backward, the direction toward the floor where the plant cultivation apparatus is installed may be defined as downward, and the direction away from the floor may be defined as upward.

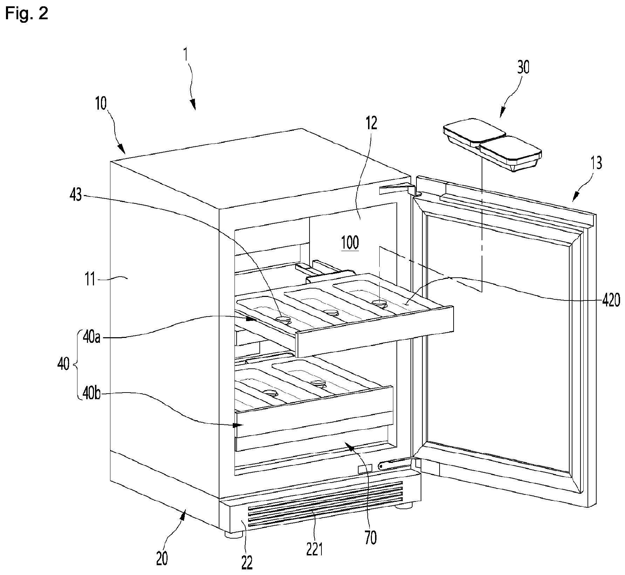

FIG. 1 is a perspective view illustrating a plant cultivation apparatus according to an embodiment of the present disclosure, and FIG. 2 is a perspective view illustrating a state where the door of the plant cultivation apparatus is opened.

As illustrated in the drawing, the plant cultivation apparatus 1 according to an embodiment of the present disclosure may be formed in a hexahedral shape. **In** addition, the plant cultivation apparatus 1 may be installed alone in an indoor space and may have a size and structure capable of being built-in to furniture together with other electronic products, if necessary.

For example, the plant cultivation apparatus 1 may have a relatively low height, unlike the present embodiment, may have a higher height in the vertical direction, and may have various sizes that can be installed for home use, such as three or more cultivation shelves 40 arranged vertically therein.

The plant cultivation apparatus 1 in which the seed package 30 for plant cultivation apparatus according to an embodiment of the present disclosure is used may form an outer appearance by a cabinet 10 forming a space in which plants are cultivated and a door 13 opening and closing the cabinet 10.

The cabinet 10 is formed to have an open front, and a cultivation space 100 may be provided therein. The cabinet 10 may be insulated, and the cultivation space 100 may maintain a set temperature according to a temperature controller disposed in the cabinet.

For example, since the plant cultivation apparatus 1 may be installed in a built-in manner, the machine room module may have a structure in which air for cooling and heat dissipation inside the machine room 20 may be introduced and discharged forward. **In** other words, the front cover 22 may be formed on the front of the machine room 20. A grill portion 221 having a plurality of openings may be formed in the front cover 22.

Meanwhile, the cabinet 10 may be composed of an outer case 11 forming an outer appearance and an inner case 12 forming the cultivation space 100, and a heat insulation material may be provided between the outer case 11 and the inner case 12 to insulate the cultivation space 100.

Inside the cabinet 10, a plurality of cultivation shelves 40 may be disposed vertically. **In** this embodiment, the upper and lower two cultivation shelves 40 are provided and may have the same structure.

The cultivation shelf 40 may be provided with an upper cultivation shelf 40a and a lower cultivation shelf 40b, and two or more cultivation shelves may be further provided depending on the size of the cabinet 10.

**In** addition, the cultivation shelf 40 may be configured to be drawn in and out from the inside of the cabinet 10 in the front and rear direction, and mounting of the seed package 30 containing plant seeds for cultivation, and management and harvesting of plants may be facilitated.

The cultivation shelf 40 may have a structure in which a plurality of seed packages 30 are seated. **In** addition, the cultivation shelf 40 may have a divided structure so that a plurality of seed packages 30 are disposed in independent areas so that plants can be cultivated and harvested.

For example, a plurality of seating portions 420 recessed in a shape corresponding to the seed package 30 may be formed on the upper surface of the cultivation shelf 40, and a seed package 30 desired by the user may be seated on the seating portion 420 to cultivate plants.

**In** addition, water may be supplied to the cultivation shelf 40 from the water tank 70, and the water supplied to the cultivation shelf 40 may be selectively supplied to the seating portion 420 among the plurality of seating portions 420 on which the seed package 30 is disposed.

**In** detail, the cultivation shelf 40 may include a shelf tray 42 on which the seed packages 30 are seated, and a shelf base 41 accommodating water supplied to the seed packages 30. The shelf tray 42 may be mounted on the upper surface of the shelf base 41 in an overlapping state.

The shelf tray 42 may include a tray upper surface 421 forming the overall outer appearance of the upper surface, and a seating portion 420 that is recessed in the tray upper surface 421 and on which the seed package 30 is seated.

**In** addition, a shutter 43 may be provided at the center of the bottom surface of the seating portion. The shutter 43 may be provided one by one for each of the plurality of seating portions 420. **In** addition, the shutter 43 penetrates the bottom surface 322 of the seating portion, and the water accommodated in the cultivation shelf 40 can be selectively introduced by vertical movement. Since the shutter 43 enables selective water supply to the seating portion 420, the shutter may also be referred to as a water supply member or a water supply portion.

The shutter 43 may be operated according to the mounting of the seed package 30, and the inner side of the seating portion 420 among the plurality of seating portions 420 on which the seed package 30 is not mounted is maintained in a closed state so that water is not introduced in, and water is introduced into the seating portion 420 on which the seed package 30 is mounted by maintaining an opened state so that water can be supplied to the seed package 30.

**In** other words, the shutter 43 may be configured to selectively supply water to the seating portion 420 among the plurality of seating portions 420 on which the seed package 30 is mounted according to whether the seed package 30 is mounted.

The shutter 43 may be disposed at a position facing the recessed portion 314 of the seed package 30. When the seed package 30 is seated on the seating portion 420, a portion of the shutter 43 is accommodated inside the recessed portion 314, and the lower surface of the recessed portion 314 is configured to operate the shutter 43 by pressing the upper surface of the shutter 43.

Meanwhile, the shelf base 41 may be provided below the shelf tray 42. The shelf base 41 may flow and store water supplied from the water tank 70.

**In** addition, inside the shelf base 41, a shutter accommodation portion 415 in which the shutter 43 is accommodated, and a base flow path 417 connecting the shutter accommodation portion 415, the water supply portion 416, and the drain hole may be formed

**In** addition, a base seating portion 410 is formed inside the upper surface 411 of the shelf base, and the lower surface of the base seating portion 410, that is, the bottom surface 414 of the base may be formed to be in surface contact with the bottom surface of the seating portion 420.

In addition, a lighting device for irradiating light toward the upper surface of the cultivation shelf 40 may be provided above the cultivation shelf 40.

The seed package 30 may be selected by the user, and the user may select and purchase a desired type of crop through the aftermarket. In addition, the seed package 30 may be supplied in the form of delivery by a user's order, or may be regularly supplied by a manager. Of course, it may be possible for the user to directly dispose and use seeds for cultivation in the seed package 30 provided as needed.

The seed package 30 may be supplied not only in a form accommodated inside the seed, but also in a state where the seeds germinate and sprout, or in a state where plants in a state after a certain period of time have passed after germination are disposed.

The user can cultivate by seating the seed package 30 in which the desired crop is placed on the seating portion 420 of the cultivation shelf 40, and different types of seed packages 30 are disposed on one cultivation shelf 40 and thus it will also be possible to cultivate heterogeneous plants. In addition, when cultivation is completed or replacement with another crop is desired, the seed package 30 may be removed from the seating portion 420 or replaced.

Hereinafter, the structure of the seed package 30 will be described in more detail with reference to drawings.

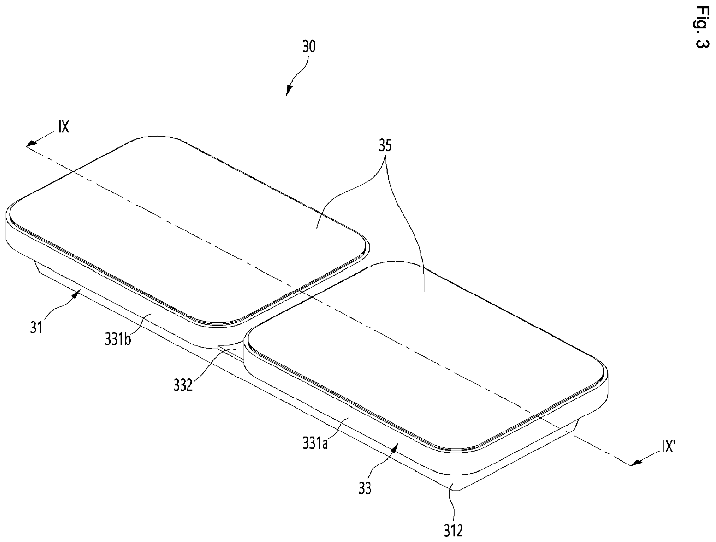

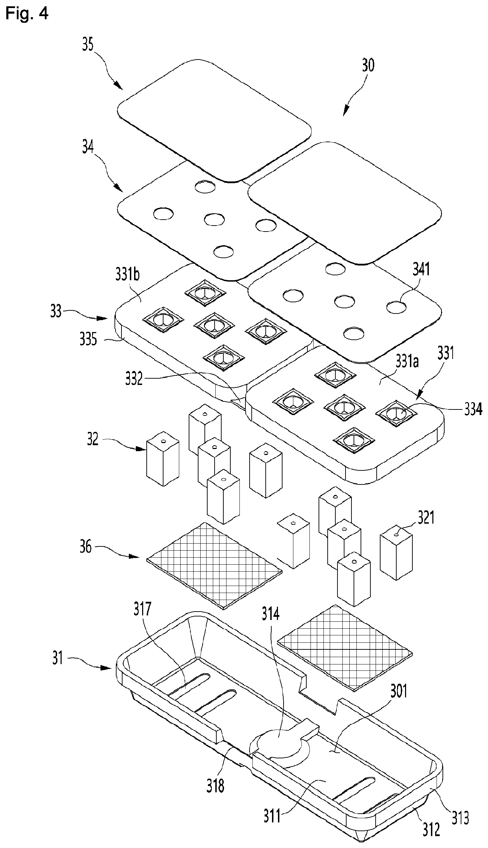

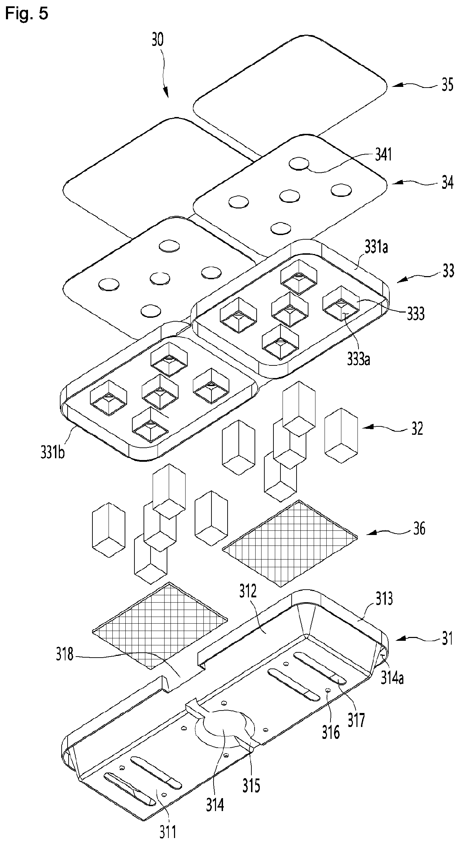

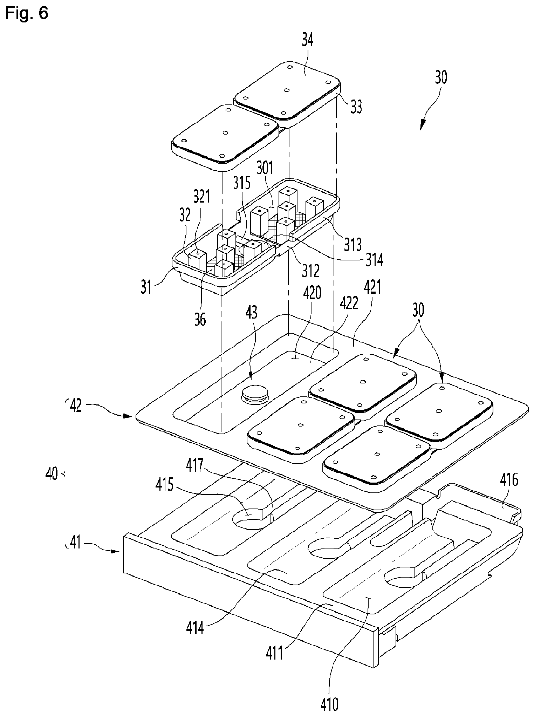

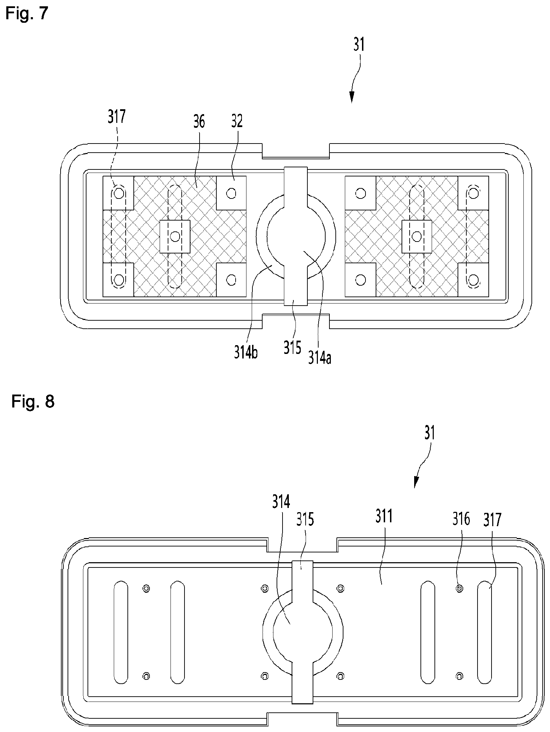

FIG. 3 is a perspective view illustrating a seed package according to an embodiment of the present disclosure, FIG. 4 is an exploded perspective view illustrating a state where the seed package is viewed from above, FIG. 5 is an exploded perspective view illustrating a state where the seed package is viewed from below, FIG. 6 is an exploded perspective view illustrating the cultivation shelf and the seed package, FIG. 7 is a view illustrating a state where the container is viewed from above, and FIG. 8 is a view illustrating a state where the container is viewed from below.

As illustrated in the drawings, the seed package 30 may include a seed accommodation member 32 including cultivation seeds, a container 31 forming a space 301 for accommodating the seed accommodation member 32, and the container cover 33 for shielding the open upper surface of the container 31.

**In** addition, the seed package 30 may have a reflective sheet 34 attached to an upper surface of the container cover 33.

**In** addition, on the upper surface of the container cover 33, a cover sheet 35 in which, when the container 31 is packaged and transported, the upper surface of the container cover 33 is sealed to prevent the seed package 30 from being damaged or seeds accommodated inside from being escaped to the outside may be further provided.

The container 31 may include a flat bottom surface 311 and a circumferential surface 312 extending upward along the circumference of the bottom surface 311, an edge 313 bent outward from the upper end of the circumferential surface 312 may be formed thereon.

The size of the bottom surface 311 is formed to correspond to the size of the seating portion 420, so that the bottom surface 311 can be supported by the bottom surface 311 of the seating portion. **In** addition, the height of the circumferential surface 312 is formed higher than the depth of the seating portion 420, so that the container cover 33 shielding the container 31 may be located more upward than the upper surface of the cultivation shelf 40.

Meanwhile, a recessed portion 314 formed by being recessed from the lower surface of the container 31 may be formed on the bottom surface 311 of the container. The recessed portion 314 may protrude from the bottom surface 311 of the container 31 when the accommodation space 301 of the container 31 is viewed from above.

The recessed portion 314 may be formed at the center of the container bottom surface 311 and may be formed at a position corresponding to the shutter 43. Therefore, when the seed package 30 is seated on the seating portion 420, the shutter 43 may be accommodated inside the seating portion 420 and may become a state where water can be supplied into the seed package 30.

The recessed portion 314 may include an upper surface 314a located above the bottom surface 311 of the container and a circumferential surface 314b extending along the circumference of the upper surface 314a and extending to the bottom surface 311 of the container. The circumferential surface 314b of the recessed portion may be inclined toward the outside as it extends downward. **In** addition, the height of the circumferential surface 314b of the recessed portion may be formed to have a height which is capable of opening the shutter 43 by pressing the shutter 43 by the upper surface 314a of the inlet when the seed package 30 is seated on the seating portion 420.

**In** addition, extension portion 315 extending from both sides of the recessed portion 314 to both ends of the bottom surface 311 of the container may be formed on the bottom surface 311 of the container. **In** other words, the extension portion 315 may be formed by connecting both side ends of the container bottom surface 311 and the recessed portion 314.

The extension portion 315 may be formed by being recessed to a depth corresponding to the depth at which the recessed portion 314 is recessed in the lower surface of the container 31. **In** other words, the extension portion 315 may protrude from the bottom surface 311 of the container at a height corresponding to the height of the recessed portion 314 when viewing the accommodating space 301 of the container 31 from above.

There is an advantage in that, when the seed package 30 is seated on the seating portion 420, the extension portion 315 allows air in the space between the seed package 30 and the seating portion 420 to escape to the outside, and at the same time, a flow path of the water supplied from the shutter 43 can be additionally secured.

**In** addition, a spacer 316 protruding downward from the lower surface of the container 31 to secure a space between the seating portion 420 and the seed package is formed on the bottom surface 311 of the container.

A plurality of spacers 316 may be formed on the bottom surface 311 of the container. In detail, a plurality of spacers 316 may be arranged in a shape symmetrical in the front and rear direction with respect to the center of the bottom surface 311 of the container.

For example, a plurality of spacers 316 may be formed in the front and rear direction based on the center of the recessed portion 314. In addition, the spacers 316 may be formed as a pair in a space between the water inlets 317 adjacent to each other in the front and back direction.

When the seed package 30 is seated on the seating portion 420, the spacer 316 does not completely adhere to the bottom surface 311 of the container and the seating portion 420 and makes it possible to secure a predetermined separation space. Therefore, a flow path of the water supplied from the shutter 43 is secured so that the water can flow uniformly to the front and rear ends and both side ends of the container 31.

In addition, a water inlet 317 is formed on the bottom surface 311 of the container. The water inlet 317 penetrates the bottom surface 311 in the vertical direction and may be formed long in the front and rear direction of the bottom surface 311 based on FIG. 7. In addition, a plurality of water inlets 317 may be formed on the bottom surface 311 of the container by being spaced apart from the recessed portion 314 at a set interval.

**In** detail, the water inlet 317 may be formed in a symmetrical shape with respect to the center of the bottom surface 311.

Referring to FIG. 7, the water inlet 317 may be disposed symmetrically in both sides with respect to the recessed portion 314. **In** other words, a plurality of the water inlets 317 may be disposed close to both side ends based on the center of the container 31.

**In** other words, when viewed from the front side of the door in a state where the seed package 30 is seated on the seating portion 420, the water inlet 317 may be formed long in the left and right direction of the bottom surface 311 of the container. **In** other words, the water inlet 317 is formed as a long hole, so that an area for providing sufficient water required for the growth of seeds or plants accommodated in the container 31 can be secured. **In** addition, by increasing the speed of the water flowing into the container 31, it is possible to reduce the differential pressure generated by the shield member 36, so that water can be uniformly supplied within the entire space of the container 31 within a short time.

**In** addition, if the water inlet 317 is formed in the center of the container or formed on the recessed portion 314, there is a problem in that the roots of the plant directly pass through the water inlet 317 during the water flow process and thus are caught in the shutter 43 below. **In** the present disclosure, the distance between the water inlet 317 and the recessed portion 314 in which the shutter 43 is accommodated is secured, so that it is possible to prevent roots and the like of plants from passing through the water inlet 317 due to the flow of water.

The water inlet 317 may be disposed in plurality at the front and rear end portions of the bottom surface 311 of the container. **In** addition, the seed accommodation member 32 may be disposed above the water inlet 317. **In** other words, the water inlet 317 may be disposed to overlap the lower end of the seed accommodation member 32. Therefore, the seed accommodation member 32 disposed on the water inlet 317 allows the water introduced through the shutter 43 to flow so that he water moved to the water inlet 317 may be absorbed directly into the seed accommodation member 32.

The water introduced into the recessed portion 314 flows in the front and rear direction and both sides of the bottom surface 311 of the container, and through the water inlet 317 disposed at the front and rear end portions of the bottom surface 311 of the container, water may be supplied into the container 31. **In** addition, the supplied water is absorbed into the seed accommodation member 32 to provide moisture necessary for seed germination and plant growth.

The total area of the water inlet 317 may be 1 to 20%, preferably 5 to 15%, more preferably about 10% of the total area of the bottom surface 311.

Specifically, the water inlet 317 may be provided symmetrically on both sides of the bottom surface 311 of the container, and a pair of water inlets 317 may be formed on both sides of the bottom surface 311 of the container, respectively. **In** this case, a total of four water inlets 317 may be provided on the bottom surface 311 of the container, and the area occupied by the single water inlet 317 on the bottom surface 311 may be formed in a size of 1 to 3% of the total area of the bottom surface 311.

**If** the water inlet 317 is formed with the same area as described above, when the seed package 30 is seated on the seating portion 420, the area and flow rate into which water is introduced may be adjusted to reduce the differential pressure by the shielding member 36. Therefore, water can be evenly supplied to the entire bottom surface 311 of the container by the water inlet 317, and water may be supplied over a certain water level to the entire bottom surface 311 of the container during the water supply time.

A shielding member 36 to be described below is disposed above the water inlet 317, and the seed accommodation member 32 may be disposed above the shielding member 36. **In** other words, the water inlet 317 and the shielding member 36 may be disposed such that at least a portion thereof overlaps with each other.

**In** addition, the water inlet 317, the shielding member 36, and the seed accommodation member 32 may be disposed to overlap in the container 31. Therefore, the water supplied to the inside of the container 31 through the water inlet 317 can be directly supplied to the seed accommodation member 32.

**In** addition, it is possible to prevent the root of the plant out of the seed accommodation member 32 by the shielding member 36, or the seed accommodation member 32 itself from being caught in the shutter 43 by passing through the water inlet 317.

The container edge 313 may further include cutout grooves 318 formed by cutting portions of both side surfaces. The cutout groove 318 is formed at a position corresponding to a cover connection portion 332 to be described later, so that the container cover 33 and the container 31 may be fixed so that they are not easily separated.

**In** addition, a shielding member 36 may be provided at the water inlet 317.

The shielding member 36 may be formed above the bottom surface 311 to cover the water inlet 317 and may have a structure through which water may pass.

**In** detail, the shielding member 36 may be formed of a material such as fabric or paper or may be formed of a net material such as a mesh to allow water to pass therethrough.

**In** other words, the shielding member 36 may be formed to cover the water inlet 317, and it is possible to prevent the roots of plants growing through the seed accommodating member 32 from blocking the water inlet 317.

**If** the roots of the plant leave the seed package 30 through the open water inlet 317 and take root and extend to the shutter 43, the shutter 43 cannot be opened and closed smoothly and thus eventually, there is a problem of insufficient water supply for plant cultivation.

A plurality of shielding members 36 may be provided at both sides of the recessed portion 314 as a reference to FIG. 7, or in the front and rear direction, when the seed package 30 is seated on the seating portion 420, when viewed from the front of the door.

In other words, a predetermined gap is disposed between the shielding member 36 and the recessed portion 314. Therefore, it may be disposed to be spaced apart from the shutter 43 located below the shielding member 36 and the recessed portion 314. Accordingly, foreign matters filtered in the shielding member 36 is prevented from being moved to the shutter 43, thereby preventing damage to the shutter 43 due to foreign matters being caught.

In addition, when the shielding member 36 is disposed on the bottom surface 311 of the container, it may cover the entire bottom surface 311 except for the recessed portion 314. The shielding member 36 may be provided between the water inlet 317 and the seed accommodation member 32.

In other words, the shielding member 36 is provided in close contact with the lower surface of the seed accommodation member 32, and the shielding member 36 may be disposed to overlap the entire lower surface of the seed accommodation member 32 provided in the container 31. In other words, the seed accommodation member 32 is disposed within the region of the shielding member 36.

The water inlet 317, the seed accommodation member 32 and the shielding member 36 are disposed to overlap. With this structure, it is possible to prevent the water inlet 317 from being blocked by the roots of plants that have escaped from the seed accommodation member 32. In addition, the seed accommodation member 32 itself can be prevented from being caught in the shutter 43 as a portion of the seed accommodation member 32 comes off due to external shock, aging, and the like.

The seed accommodation member 32 may be composed of a plurality of pieces, and a plurality of seed accommodation member 32 may all be spaced apart from each other inside the accommodation space 301 of the container 31.

At least a portion of the seed accommodation member 32 may be disposed on the same extension line as the water inlet 317 in the vertical direction. **In** addition, at least a portion of the seed accommodation member 32 may be disposed so as not to overlap with the water inlet 317.

**In** detail, the water inlet 317 may not be formed on the lower surface of the seed accommodation member 32 disposed close to the center of the container bottom surface 311 among the plurality of seed accommodation members 32. **In** addition, the water inlet 317 may be formed on the lower surface of the seed accommodation member 32 disposed on both sides of the bottom surface 311 of the container.

With this structure, the differential pressure by the shielding member 36 and the rate of inflow of water are adjusted so that water can be uniformly introduced into the entire inside of the container.

Meanwhile, the seed accommodation member 32 may accommodate plant seeds 322 for cultivation and may absorb water supplied into the seed package 30 and supply the water to the seeds.

The seed accommodation member 32 may be formed of a porous material or a network structure to facilitate water absorption, and water absorbed from the bottom by capillary action may be transmitted to the seed 322. For example, the seed accommodation member is formed in a block shape and may be formed in a fine cell structure open to each other in the entire area of the seed accommodation member 32.

At this time, the fine cells distributed throughout the seed accommodation member 32 are formed in a size between 0.1 mm and 1.5 mm in diameter to facilitate water absorption in the container 31 and to facilitate oxygen supply to the roots growing in the seed accommodation member 32. **In** addition, the seeds 322 inside the seed accommodation groove 321 may be formed to grow outside the seed accommodation member 32 by passing through the cells while preventing the seeds 322 from escaping through the cells. **In** particular, the seed accommodation member 32 may be formed of a stretchable material, and thus the cell may be enlarged so that roots growing after the seed 322 germinates pass through the cell.

**In** addition, the seed accommodation member 32 may be formed of various materials capable of absorbing moisture and maintaining the shape thereof. For example, the seed accommodation member 32 may be formed of a sponge material such as an oasis. **In** addition, the seed accommodation member 32 may be formed of an elastically deformable material or structure.

The cross-sectional shape of the seed accommodation member 32 may have a shape corresponding to the shape of the accommodation member mounting portion 333. The seed accommodation member 32 may be formed in a hexahedral shape, the upper end thereof may be configured to be inserted into the accommodation member mounting portion 333, and the lower end thereof may be configured to be supported on the bottom surface 311 of the container.

**In** addition, a seed accommodation groove 321 recessed downward may be formed on the upper surface of the seed accommodation member 32. Seeds 322 may be accommodated inside the seed accommodation groove 321, and the recessed lower end of the accommodation groove may be located on one side away from the container bottom surface 311. The seed accommodation groove 321 is recessed downward, but may be formed higher than the maximum level of water accommodated in the container 31. Therefore, it is possible to prevent the seeds inside the seed accommodation groove 321 from being submerged in water.

These seed accommodation members 32 may be provided in plurality in the container 31, and each seed accommodation member 32 may be spaced apart from each other.

The seed accommodation member 32 may be partitioned in the front and rear directions around the recessed portion 314, and the plurality of seed accommodation members 32 may be arranged in a predetermined shape in the partitioned space.

The arrangement of the seed accommodation member 32 is not limited, but as an example, it may be arranged at each corner of a square on both sides based on the recessed portion 314, and one more seed accommodation member 32 may be provided in the center of the square.

**In** other words, in the seed accommodation member 32, four seed accommodation members 32 are arranged at the corners of a square on both sides of the recessed portion 314, respectively and one is arranged at the center of the square, and a total of 10 seed accommodation members may be provided inside the container 31. Of course, the seed accommodation member 32 may be arranged in plurality inside the container 31 without relying on this arrangement.

Meanwhile, when the seeds 322 germinate, plants grow along the seed accommodation groove 321, and roots may pass through the seed accommodation member 32 and grow.

**In** other words, soil or medium containing nutrients is not accommodated in the container 31, and only water containing nutrients may be configured to be supplied internally to the seed package 30 after the seed package 30 is mounted on the cultivation shelf 40. Therefore, it is possible to prevent the inside of the seed package 30 from being contaminated by mold or algae.

**In** addition, water is drained through the cultivation shelf 40 in situations other than a water supply situation inside the seed package 30 to maintain a state where there is no water inside the seed package 30. Therefore, the seed package 30 and the cultivation shelf 40 are not contaminated.

As such, the inside of the seed package 30 is not filled with components such as a medium or soil for supplying nutrients. **In** addition, the seed accommodation member 32 is spaced apart from each other inside the container 31 and thus a significant portion of the accommodation space 301 inside the container 31 may be empty. Accordingly, both the flow of water supplied and the flow of drained water from the inside of the container 31 can be smoothly achieved.

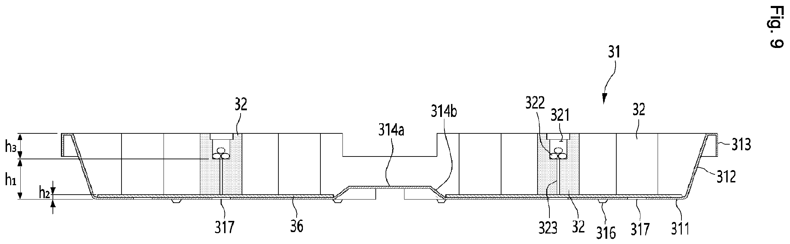

FIG. 9 is a cross-sectional view taken along line IX-IX' of FIG. 3.

Referring to the drawings, in the container 31, in a state where the seed accommodation member 32 is seated on the bottom surface 311 of the container 31, the seed accommodation groove 321 may be spaced apart at set intervals.

In detail, the lower end of the seed accommodation groove 321 may be spaced upward from the bottom surface 311 of the container 31 at a distance h1 of 15 to 20 mm. In addition, the total vertical length h3 of the seed accommodation groove 321 may be formed of 10 to 20mm.

In addition, at the bottom of the seed accommodation groove 321 may further include a fine hole 323 extending toward the bottom surface 311 of the container. The fine hole 323 may be formed smaller than the diameter of the seed accommodation groove 321.

When the fine holes 323 are further included, the upper and lower lengths of the fine holes 323 may be formed to be 5 to 15 mm. In addition, the fine holes 323 may be spaced apart from the bottom surface 311 of the container by about 2 to 7 mm upward.

The fine holes 323 serve to smoothly transfer the water supplied into the container 31 to the seed accommodation groove 321 by capillary action. Therefore, the fine hole 323 is connected to the lower end of the seed accommodation groove 321, so that sufficient water can be supplied to the seed.

Meanwhile, the maximum water level h₂ of the container 31 may have a height of about 5 to 15 mm, preferably about 5 to 10 m from the bottom surface of the container 31 or the bottom surface of the seed accommodation member 32.

With this structure, the seed accommodation member 32 absorbs the water supplied into the container 31 at a high speed, so that moisture required for plant growth can be sufficiently supplied.

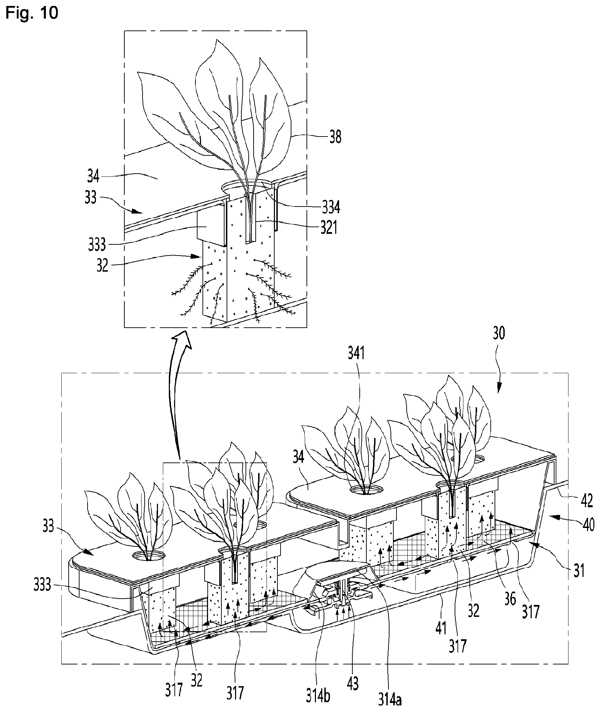

FIG. 10 is a cutaway perspective view illustrating a state where plants are grown in the seed package.

As illustrated in the drawing, in a state where the seed package 30 is disposed inside the plant cultivation apparatus 1, an appropriate water supply to the cultivation shelf 40 and the seed package 30 is made by operating the plant cultivation apparatus 1, light is irradiated through the lighting device, and the temperature control and air flow of the cultivation space 100 are provided by driving the temperature controller and the blower so that plants grow.

To this end, the seed accommodation member 32 continuously supplies the water flowing into the container 31 to the seed 322, and after germination of the seed 322, will supply water to the root of the plant 38.

**In** detail, the water introduced into the shelf tray 42 through the shutter 43 passes through the recessed portion 314 and is supplied to the inside of the container 31 through the water inlet 317 located on both sides. Then, the water introduced into the container 31 is absorbed by the seed accommodation member 32 to supply water to the plants.

Meanwhile, the roots of the plants 38 growing inside the seed accommodation member 32 may pass through the seed accommodation member 32 and grow into the container 31. At this time, if the water inlet 317 is located above the shutter 43, in the process of supplying or draining water into the container 31, the roots of the plant grow toward the recessed portion 314 and are caught in the shutter 43 and thus the water supply thereto may not be smooth. **In** the present disclosure, the water inlet 317 is spaced apart from the recessed portion 314 to prevent plant roots from being caught in the shutter 43.

**In** addition, the stem of the plant 38 growing inside the seed accommodation member 32 may pass through the cover hole 334 inside the seed accommodation groove 321 of the seed accommodation member 32 and be exposed upward of the seed package 30.

Plants inside the seed accommodation member 32 continuously grow, and the seed accommodation member 32 expands due to the roots and stems of the plant 38. **In** other words, the seed accommodation member 32 expands as being pressed outeard by the root of the plant 38 growing through the seed accommodation member 32 and the stem of the plant 38 growing outside the container cover 33. Therefore, the seed accommodation member 32 can be more firmly fixed in a state of being inserted into the accommodation member mounting portion 333.

While the seed accommodation member 32 remains in a state of being attached to the accommodation member mounting portion 333, the water inside the container 31 is effectively absorbed so that it can be evenly supplied to the entire root of the plant 38.

The shielding member 36 is provided at the bottom of the seed accommodation member 32 so that the roots of the grown plants 38 can be caught on the shielding member 36, so that the roots of the plant can be prevented from passing through the water inlet 317. **In** addition, the seed accommodation member 32 may be crushed due to aging of the seed accommodation member 32, and these foreign matters may be filtered by the shielding member 36. Therefore, it is possible to prevent problems in which the shutter 43 is damaged by plant roots or foreign matters, or the opening and closing operation is not smooth.

Meanwhile, the container cover 33 may include a plate-shaped cover plate 331 that shields the open upper surface of the container 31.

The container cover 33 may include a first cover portion 331a formed along the circumference of the front portion of the upper surface of the container based on the central portion of the container 31, that is, the recessed portion 314, and a second cover portion 331b formed along the circumference of the rear portion of the upper surface of the container. **In** addition, the container cover 33 is configured to include a cover connection portion 332 connecting the first cover portion 331a and the second cover portion 331b at a central portion. **In** other words, the first cover portion 331a and the second cover portion 331b are divided based on the cover connection portion 332.

**In** addition, the reflective sheet 34 and the cover sheet 35 may be respectively attached to upper surfaces of the first cover portion 331a and the second cover portion 331b. Therefore, it is possible to divide the space within one container 31 to grow two types of plants, and it is possible to distinguish them by displaying information on the plants on the cover sheet 35, respectively.

**In** addition, an accommodation member mounting portion 333 to which the seed accommodation member 32 is fixedly mounted may be formed on the lower surface of the cover plate 331. The accommodation member mounting portion 333 protrudes downward from the lower surface of the container cover 33, and an insertion hole 333a is formed at the lower end so that the upper end of the seed accommodation member 32 is inserted. **In** other words, the cross-sectional shape of the insertion hole 333a may correspond to the upper surface shape of the seed accommodation member 32.

An upper surface of the cover plate 331 may include a cover hole 334 opened at a position corresponding to the accommodation member mounting portion 333. **In** other words, the cover hole 334 may communicate with the opened insertion hole 333a. **In** addition, the size of the cover hole 334 may be larger than that of the seed accommodation groove 321. **In** this structure, the stems grown by germination of the seeds accommodated in the seed accommodation groove 321 may pass through the cover hole 334 and be exposed to the outside.

**In** addition, the container cover 33 may be formed with a cover edge portion 335 extending downward along the circumference of the cover 33. The cover edge portion 335 may be formed to cover the outer surface of the container 31 and may prevent the container 31 from being deformed or damaged by an external impact.

Meanwhile, a reflective sheet 34 may be attached to an upper surface of the container cover 33. The reflective sheet 34 may be formed in a sheet shape capable of reflecting light emitted from the lighting device. **In** other words, it is possible to prevent the temperature of the seed package 30 from increasing through reflection of light.

For example, the reflective sheet 34 may be formed in white. **In** addition, a sheet hole 341 cut or penetrating may be formed in the reflective sheet 34 at a position corresponding to the cover hole 334.

Accordingly, the reflective sheet 34 can be prevented from being interfered with during the process of plant growth by allowing stems from which seeds germinate and grow to be exposed to the outside through the container cover 33 and the sheet hole 341.

**In** addition, a cover sheet 35 may be attached to an upper surface of the container cover 33. The cover sheet 35 is positioned above the reflective sheet 34 and may be attached to the cover edge portion 335 or adhered to the reflective sheet 34.

The cover sheet 35 seals the upper surface of the container cover 33 during packaging and transportation of the container 31 so that it may be possible to prevent the seed package 30 from being damaged, to prevent seeds accommodated inside the seed package 30 from being exposed to the outside, or to prevent the inside of the seed package 30 from being contaminated due to inflow of external contaminants.

**In** addition, the type of crop to be cultivated and related cultivation information may be printed on the cover sheet 35. Accordingly, the user can obtain information necessary for plant cultivation by utilizing the information displayed on the cover sheet 35. For example, such information may be displayed in a manner such as a barcode or QR-code, and information may be obtained through a mobile phone or a reader of the plant cultivation apparatus 1 itself.

The reflective sheet 34 and the cover sheet 35 may be respectively attached to the cover plate 331 divided into two portions. Therefore, when two types of crops are cultivated in the seed package 30, different cover sheets 35 are attached to both sides of the container cover 33 to provide information about the cultivated plants to the user.

**In** order to cultivate plants using the plant cultivation device 1, the cover sheet 35 of the seed package 30 is removed, and the seed package 30 is placed on the seating portion 420 of the cultivation shelf 40. **In** addition, the operation of the plant cultivation device 1 can be set using the information on the cover sheet 35, and the operation of the plant cultivation device 1 can be controlled according to the setting.

Meanwhile, both sides of the seed package 30 may be symmetrical with respect to the center. Therefore, it is also possible to cultivate different types of crops on both sides of the seed package 30 based on the water inlet 317. **In** other words, heterogeneous crops can be cultivated within one seed package 30.

Meanwhile, the seed accommodation member 32 according to an embodiment of the present disclosure has been described as the seeds are accommodated in the seed accommodation groove 321, but is not limited thereto, and various other configurations may be provided in the seed accommodation member 32. Hereinafter, various embodiments of the seed accommodation member 32 will be described in detail.

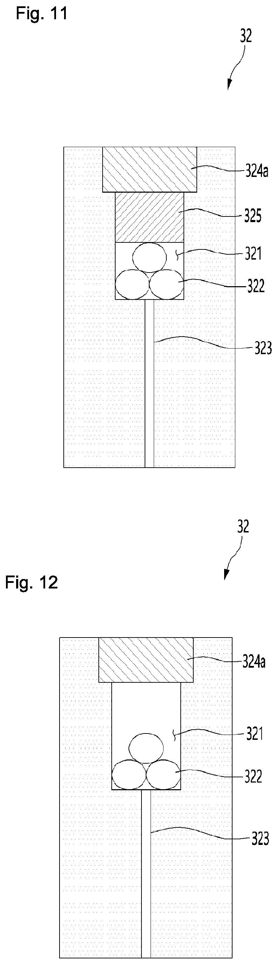

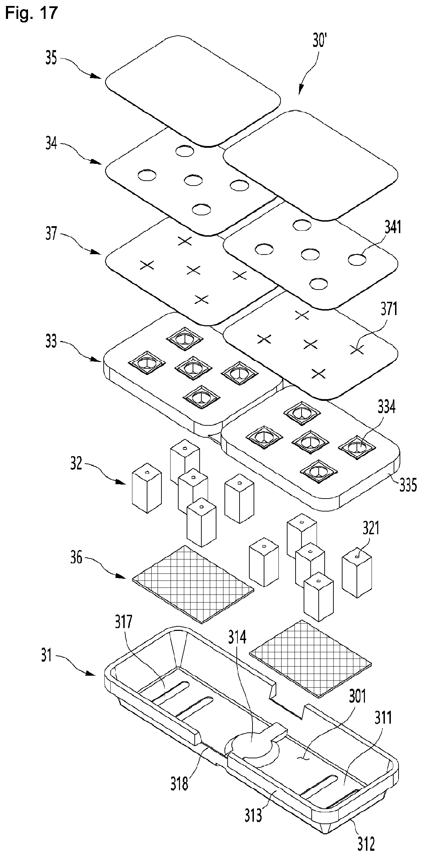

FIGS. 11 to 16 are cross-sectional views illustrating the seed accommodation members according to the first to sixth embodiments, respectively, and FIG. 17 is a view illustrating a state where the inside of a seed package according to another embodiment of the present disclosure is viewed from above.

Referring to the drawings, the seed accommodation member 32 may include a seed accommodation groove 321 for accommodating seeds and a fine hole 323 extending from the lower end of the seed accommodation groove 321 to the lower end portion of the seed accommodation member 32.

**In** addition, the seed accommodation member 32 may further include a cover member 324 formed to cover the upper end portion of the seed accommodation groove 321.

The cover member 324 may prevent seeds from being exposed to the outside or being separated while the seed package 30 is transported or stored. **In** addition, there is an advantage in that the cover member 324 shields the open upper surface of the seed accommodation groove 321 to prevent poor germination due to aging of seeds due to moisture and air degradation during long-term storage of the seed package 30.

The cover member 324 is possible as long as it can shield the seed accommodation groove 321, but, it is not limited thereto. For example, the cover member 324 may be a particulate 324a made of vermiculite, zeolite, or pearlite, or an oasis 324b in powder form made of the same material as the seed accommodation member 32.

**In** addition, the seed accommodation member 32 may further include a filler 325 surrounding the seed 322 in the seed accommodation groove 321.

The filler 325 is to fill the space inside the seed accommodation groove 321, but is not limited thereto, but may use natural cotton made of wool, goose down, silk, cotton, or the like. The filler 325 may prevent the seeds from contacting external air and prevent the moisture content in the seed accommodation groove 321 from decreasing, and prevents poor germination due to aging of the seeds due to long-term storage.

According to the first embodiment, as illustrated in FIG. 11, the inside of the seed accommodation groove 321 may include a filler 325 covering the seeds and particulate 324a shielding the upper surface of the seed accommodation groove 321.

**In** addition, according to the second embodiment, as illustrated in FIG. 12, seeds are provided inside the seed accommodation groove 321, and particulate 324a covering the upper surface of the seed accommodation groove 321 may be provided.

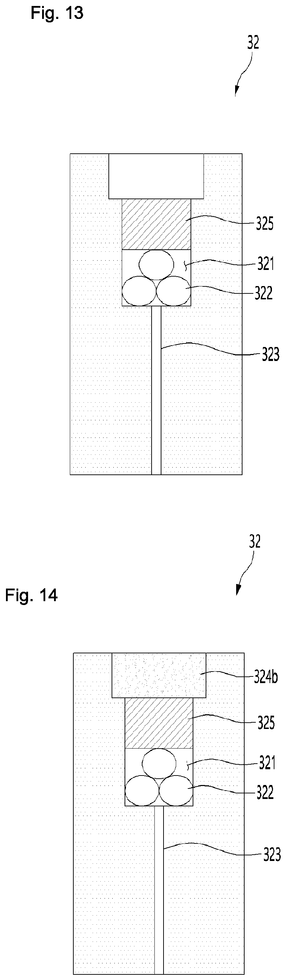

**In** addition, according to the third embodiment, as illustrated in FIG. 13, seeds are provided inside the seed accommodation groove 321, and a filler 325 covering the upper portion of the seeds may be provided.

According to the fourth embodiment, as illustrated in FIG. 14, seeds are provided inside the seed accommodation groove 321, and the oasis 324b forming the seed accommodation member is in powder form along with the filler 325 covering the upper portion of the seed, and thus may cover the open upper surface of the seed accommodation groove 321.

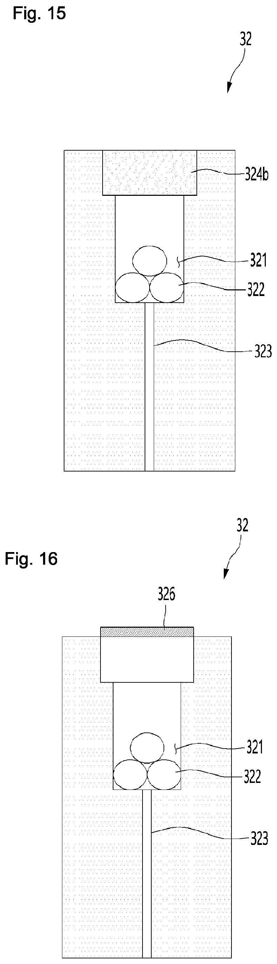

According to the fifth embodiment, as illustrated in FIG. 15, seeds are provided inside the seed accommodation groove 321, and the oasis 324b forming the seed accommodation member in powder form may cover the open upper surface of the seed accommodation groove 321.

According to the sixth embodiment, as illustrated in FIG. 16, seeds are provided inside the seed accommodation groove 321, and an accommodation groove cover 326 for shielding the open upper surface of the seed accommodation groove 321 from above is provided.

The accommodation groove cover 326 may be formed of the same material as the seed accommodation member 32, and may be, for example, an oasis in the form of a sponge.

Meanwhile, according to the seed package 30' according to another embodiment of the present disclosure, as illustrated in FIG. 17, a shielding sheet 37 may be further provided above the container cover 33. **In** detail, the shielding sheet 37 may be provided between the container cover 33 and the reflective sheet 34. The shielding sheet 37 can prevent the seeds of the seed accommodation groove 321 from being separated from the seed accommodation groove 321 during storage or transportation, or poor germination due to aging of the seed.

The shielding sheet 37 may further include an opening hole 371 through which seeds germinate and plant stems pass through. The opening hole 371 may be formed by cutting in a cross shape, for example.

Therefore, when the seed package 30' is seated in the plant growing apparatus 1, the seeds in the seed accommodation groove 321 can be stably germinated.

The scope of the present disclosure is not limited to the embodiments exemplified above, and many other modifications based on the present disclosure will be possible for those skilled in the art within the above technical scope.

### [Industrial Applicability]

Seed package and plant cultivation apparatus according to an embodiment of the present disclosure use a seed package including a seed accommodation member, do not require culture soil and the like for plant cultivation, improve cleanliness, and have high industrial applicability.

## Claims

1. A seed package (30) comprising:
a seed accommodation member (32) configured to be replaceably mountable in a cultivation space (100) of a plant cultivation apparatus (1) and formed of a material capable of absorbing moisture while accommodating the cultivation seeds therein;
a container (31) forming a space for accommodating the seed accommodation member (32), ;
a container cover (33) shielding the open upper surface of the container (31); and
a shielding member (36) provided inside the container (31) and made of a structure through which water can pass,
wherein the container (31) includes a bottom surface (311) and a circumferential surface (312) extending upward along the circumference of the bottom surface (311),
wherein, in the bottom surface (311), a recessed portion (314) formed by being recessed and a water inlet (317) spaced apart from the recessed portion (314) and opened to allow water to flow into the container (31) are formed,
wherein the water inlet (317) and the shielding member (36) are disposed so that at least a portion thereof overlaps,
wherein the seed accommodation member (32) is disposed within the region of the shielding member (36), and
wherein a plurality of seed accommodation members (32) is disposed in the front and rear direction based on the recessed portion (314).

2. The seed package (30) of claim 1,
wherein the water inlet (317) is formed in a plurality on both sides based on the recessed portion (314) and is formed long along the bottom surface (311).

3. The seed package (30) of claim 1 or 2,
wherein the container (31) includes an extension portion (315) formed by being recessed in the bottom surface (311) and connecting the recessed portion (314) and both side ends of the bottom surface (311).

4. The seed package (30) according to any one of claims 1 to 3,
wherein the container (31) includes a spacer (316) protruding downward from the bottom surface (311).

5. The seed package (30) according to any one of claims 1 to 4,
wherein at least some of the plurality of seed accommodation members (32) are disposed on the same extension line as the water inlet (317) in the vertical direction.

6. The seed package (30) according to any one of claim 1 to 5,
wherein at least some of the plurality of seed accommodation members (32) are disposed so as not to overlap each other with the water inlet (317).

7. The seed package (30) according to any one of claims 1 to 6,
wherein each of the seed accommodation members (32) includes a seed accommodation groove (321) accommodating the seed (322), and a fine hole (323) extending downward from a lower end of the seed accommodation groove (321) and formed smaller than the diameter of the seed accommodation groove (321), and
wherein the lower end of the seed accommodation groove (321) is spaced upward from the bottom surface (311) of the container (31).

8. The seed package (30) of claim 7,
wherein each of the seed accommodation members (32) further includes a cover member (324) shielding the upper surface of the seed accommodation groove (321), and a filler (325) filling the inner space of the seed accommodation groove (321).

9. The seed package (30) according to any one of claims 1 to 8,
wherein the container cover (33) includes:
a cover plate (331) shielding the open upper surface of the container (31);
an accommodation member mounting portion (333) which protrudes downward from the lower surface of the container cover (33), has an insertion hole (333a) opened at the lower end thereof, and into which the upper end of the seed accommodation member (32) is inserted; and
a cover hole (334) formed on an upper surface of the cover plate (331) and formed to communicate with the insertion hole (333a).

10. The seed package (30) according to any one of claims 1 to 9, further comprising:
a reflective sheet (34) attached to an upper surface of the container cover (33) and capable of reflecting light.

11. The seed package (30) according to any one of claims 1 to 10, further comprising:
a cover sheet (35) which is provided above the container cover (33) and on which the type of crop being cultivated is indicated; and
a shielding sheet (37) provided above the container cover (33) and including an opening hole (371) formed at a position corresponding to the seed accommodation member (32).

12. A plant cultivation apparatus (1) comprising:
a cabinet (10) forming spaces in which plants are cultivated;
the seed packages (30) according to any one of claims 1 to 11 including cultivation seeds (322) for cultivating therein;
a cultivation shelf (40) which is disposed in a cultivation space (100) of the cabinet (10) and on which the seed package (30) is seated;
a machine room (20) provided with a compressor and a condenser that perform a refrigeration cycle for temperature control of the cultivation space (100).

13. The plant cultivation apparatus (1) of claim 12,
wherein the cultivation shelf (40) includes:
a seating portion (420) which is disposed in a plurality while being spaced apart in the vertical direction inside the cabinet (10), recessed downward, and on which the seed package (30) is seated; and
a water supply portion (43, 416) formed on the seating portion (420) and supplying water into the seed package (30), and
wherein the lower surface of the recessed portion (314) accommodates the water supply portion (43, 416).

## Patentansprüche

1. Saatgutpaket (30), umfassend:
ein Saatgutaufnahmeelement (32), das derart konfiguriert ist, dass es austauschbar in einem Kultivierungsraum (100) einer Pflanzenkultivierungsvorrichtung (1) montierbar ist, und das aus einem Material gebildet ist, das Feuchtigkeit absorbieren kann, während es das Kultivierungssaatgut darin aufnimmt;
einen Behälter (31), der einen Raum zur Aufnahme des Saatgutaufnahmeelements (32) bildet;
eine Behälterabdeckung (33), die die offene obere Fläche des Behälters (31) abschirmt; und
ein Abschirmelement (36), das innerhalb des Behälters (31) vorgesehen und aus einer Struktur gebildet ist, durch die Wasser hindurchtreten kann,
wobei der Behälter (31) eine Bodenfläche (311) und eine Umfangsfläche (312) umfasst, die sich entlang des Umfangs der Bodenfläche (311) nach oben erstreckt,
wobei in der Bodenfläche (311) ein durch Vertiefung ausgebildeter vertiefter Abschnitt (314) und ein Wassereinlass (317) ausgebildet sind, der von dem vertieften Abschnitt (314) beabstandet und offen ist, um Wasser in den Behälter (31) einströmen zu lassen,
wobei der Wassereinlass (317) und das Abschirmelement (36) derart angeordnet sind, dass sie sich zumindest teilweise überlappen,
wobei das Saatgutaufnahmeelement (32) innerhalb des Bereichs des Abschirmelements (36) angeordnet ist, und
wobei eine Mehrzahl von Saatgutaufnahmeelementen (32) in der Vorder-Rück-Richtung bezogen auf den vertieften Abschnitt (314) angeordnet ist.

2. Saatgutpaket (30) nach Anspruch 1,
wobei der Wassereinlass (317) bezogen auf den vertieften Abschnitt (314) auf beiden Seiten mehrfach ausgebildet ist und entlang der Bodenfläche (311) langgestreckt ausgebildet ist.

3. Saatgutpaket (30) nach Anspruch 1 oder 2,
wobei der Behälter (31) einen Erstreckungsabschnitt (315) umfasst, der durch Vertiefung in der Bodenfläche (311) ausgebildet ist und den vertieften Abschnitt (314) mit beiden seitlichen Enden der Bodenfläche (311) verbindet.

4. Saatgutpaket (30) nach einem der Ansprüche 1 bis 3,
wobei der Behälter (31) einen Abstandshalter (316) umfasst, der von der Bodenfläche (311) nach unten vorsteht.

5. Saatgutpaket (30) nach einem der Ansprüche 1 bis 4,
wobei mindestens einige aus der Mehrzahl von Saatgutaufnahmeelementen (32) in vertikaler Richtung auf derselben Erstreckungslinie wie der Wassereinlass (317) angeordnet sind.

6. Saatgutpaket (30) nach einem der Ansprüche 1 bis 5,
wobei mindestens einige aus der Mehrzahl von Saatgutaufnahmeelementen (32) derart angeordnet sind, dass sie sich jeweils nicht mit dem Wassereinlass (317) überlappen.

7. Saatgutpaket (30) nach einem der Ansprüche 1 bis 6,
wobei jedes der Saatgutaufnahmeelemente (32) eine Saatgutaufnahmenut (321), die das Saatgut (322) aufnimmt, und ein Feinloch (323) umfasst, das sich von einem unteren Ende der Saatgutaufnahmenut (321) nach unten erstreckt und kleiner als der Durchmesser der Saatgutaufnahmenut (321) ausgebildet ist, und
wobei das untere Ende der Saatgutaufnahmenut (321) von der Bodenfläche (311) des Behälters (31) nach oben beabstandet ist.

8. Saatgutpaket (30) nach Anspruch 7,
wobei jedes der Saatgutaufnahmeelemente (32) ferner ein Abdeckelement (324), das die obere Fläche der Saatgutaufnahmenut (321) abschirmt, und ein Füllmaterial (325), das den Innenraum der Saatgutaufnahmenut (321) füllt, umfasst.

9. Saatgutpaket (30) nach einem der Ansprüche 1 bis 8,
wobei die Behälterabdeckung (33) umfasst:
eine Abdeckplatte (331), die die offene obere Fläche des Behälters (31) abschirmt;
einen Montageabschnitt für das Aufnahmeelement (333), der von der unteren Fläche der Behälterabdeckung (33) nach unten vorsteht, ein an seinem unteren Ende offenes Einsetzloch (333a) aufweist, und in das das obere Ende des Saatgutaufnahmeelements (32) eingesetzt ist; und
ein Abdeckloch (334), das an einer oberen Fläche der Abdeckplatte (331) ausgebildet und derart ausgebildet ist, dass es mit dem Einsetzloch (333a) in Verbindung steht.

10. Saatgutpaket (30) nach einem der Ansprüche 1 bis 9, ferner umfassend:
eine reflektierende Folie (34), die an einer oberen Fläche der Behälterabdeckung (33) befestigt ist und Licht reflektieren kann.

11. Saatgutpaket (30) nach einem der Ansprüche 1 bis 10, ferner umfassend:
eine Abdeckfolie (35), die oberhalb der Behälterabdeckung (33) vorgesehen ist und auf der die Art der angebauten Kulturpflanze angegeben ist; und
eine Abschirmfolie (37), die oberhalb der Behälterabdeckung (33) vorgesehen ist und ein Öffnungsloch (371) umfasst, das an einer dem Saatgutaufnahmeelement (32) entsprechenden Position ausgebildet ist.

12. Pflanzenkultivierungsvorrichtung (1), umfassend:
einen Schrank (10), der Räume bildet, in denen Pflanzen kultiviert werden;
die Saatgutpakete (30) nach einem der Ansprüche 1 bis 11, die Kultivierungssaatgut (322) zur Kultivierung darin umfassen;
eine Kultivierungsablage (40), die in einem Kultivierungsraum (100) des Schranks (10) angeordnet ist und auf der das Saatgutpaket (30) aufliegt;
einen Maschinenraum (20), der mit einem Kompressor und einem Kondensator versehen ist, die einen Kältekreislauf zur Temperaturregelung des Kultivierungsraums (100) ausführen.

13. Pflanzenkultivierungsvorrichtung (1) nach Anspruch 12,
wobei die Kultivierungsablage (40) umfasst:
einen Auflageabschnitt (420), der in mehreren, in vertikaler Richtung voneinander beabstandeten Exemplaren innerhalb des Schranks (10) angeordnet und nach unten vertieft ist und auf dem das Saatgutpaket (30) aufliegt; und
einen Wasserzufuhrabschnitt (43, 416), der auf dem Auflageabschnitt (420) ausgebildet ist und Wasser in das Saatgutpaket (30) zuführt, und
wobei die untere Fläche des vertieften Abschnitts (314) den Wasserzufuhrabschnitt (43, 416) aufnimmt.

## Revendications

1. Paquet de semences (30) comprenant :
un élément de logement de semences (32) configuré pour pouvoir être monté de manière remplaçable dans un espace de culture (100) d'un appareil de culture de plantes (1), et formé d'un matériau capable d'absorber l'humidité tout en logeant en son sein les semences de culture ;
un récipient (31) formant un espace destiné à loger l'élément de logement de semences (32) ;
un couvercle de récipient (33) protégeant la surface supérieure ouverte du récipient (31) ; et
un élément de protection (36) prévu à l'intérieur du récipient (31) et constitué d'une structure à travers laquelle l'eau peut passer,
dans lequel le récipient (31) comprend une surface de fond (311) et une surface circonférentielle (312) s'étendant vers le haut le long de la circonférence de la surface de fond (311),
dans lequel sont formées, dans la surface de fond (311), une partie en retrait (314) formée par évidement et une entrée d'eau (317) espacée de la partie en retrait (314) et ouverte de manière à permettre à l'eau de s'écouler dans le récipient (31),
dans lequel l'entrée d'eau (317) et l'élément de protection (36) sont disposés de manière à se chevaucher au moins partiellement,
dans lequel l'élément de logement de semences (32) est disposé à l'intérieur de la région de l'élément de protection (36), et
dans lequel une pluralité d'éléments de logement de semences (32) est disposée dans la direction avant-arrière par rapport à la partie en retrait (314).

2. Paquet de semences (30) selon la revendication 1,
dans lequel l'entrée d'eau (317) est formée en plusieurs exemplaires sur les deux côtés par rapport à la partie en retrait (314), et est formée de manière allongée le long de la surface de fond (311).

3. Paquet de semences (30) selon la revendication 1 ou 2,
dans lequel le récipient (31) comprend une partie d'extension (315) formée par évidement dans la surface de fond (311) et reliant la partie en retrait (314) aux deux extrémités latérales de la surface de fond (311).

4. Paquet de semences (30) selon l'une quelconque des revendications 1 à 3,
dans lequel le récipient (31) comprend une entretoise (316) faisant saillie vers le bas à partir de la surface de fond (311).

5. Paquet de semences (30) selon l'une quelconque des revendications 1 à 4,
dans lequel au moins certains parmi la pluralité d'éléments de logement de semences (32) sont disposés, dans la direction verticale, sur la même ligne d'extension que l'entrée d'eau (317).

6. Paquet de semences (30) selon l'une quelconque des revendications 1 à 5,
dans lequel au moins certains parmi la pluralité d'éléments de logement de semences (32) sont disposés de manière à ne pas se chevaucher avec l'entrée d'eau (317).

7. Paquet de semences (30) selon l'une quelconque des revendications 1 à 6,
dans lequel chacun des éléments de logement de semences (32) comprend une rainure de logement de semence (321) logeant la semence (322), et un orifice fin (323) s'étendant vers le bas à partir d'une extrémité inférieure de la rainure de logement de semence (321) et formé plus petit que le diamètre de la rainure de logement de semence (321), et
dans lequel l'extrémité inférieure de la rainure de logement de semence (321) est espacée vers le haut par rapport à la surface de fond (311) du récipient (31).

8. Paquet de semences (30) selon la revendication 7,
dans lequel chacun des éléments de logement de semences (32) comprend en outre un élément de couverture (324) protégeant la surface supérieure de la rainure de logement de semence (321), et un matériau de remplissage (325) remplissant l'espace intérieur de la rainure de logement de semence (321).

9. Paquet de semences (30) selon l'une quelconque des revendications 1 à 8,
dans lequel le couvercle de récipient (33) comprend :
une plaque de couverture (331) protégeant la surface supérieure ouverte du récipient (31) ;
une partie de montage de l'élément de logement (333), qui fait saillie vers le bas à partir de la surface inférieure du couvercle de récipient (33), comporte un orifice d'insertion (333a) qui est ouvert à l'extrémité inférieure de la partie de montage et dans lequel l'extrémité supérieure de l'élément de logement de semences (32) est insérée ; et
un orifice de couverture (334) formé sur une surface supérieure de la plaque de couverture (331) et formé de manière à communiquer avec l'orifice d'insertion (333a).

10. Paquet de semences (30) selon l'une quelconque des revendications 1 à 9, comprenant en outre :
une feuille réfléchissante (34) fixée à une surface supérieure du couvercle de récipient (33) et capable de réfléchir la lumière.

11. Paquet de semences (30) selon l'une quelconque des revendications 1 à 10, comprenant en outre :
une feuille de couverture (35) qui est prévue au-dessus du couvercle de récipient (33) et sur laquelle est indiqué le type de plante en cours de culture ; et
une feuille de protection (37) prévue au-dessus du couvercle de récipient (33) et comprenant un orifice d'ouverture (371) formé à une position correspondant à l'élément de logement de semences (32).

12. Appareil de culture de plantes (1) comprenant :
une armoire (10) formant des espaces dans lesquels des plantes sont cultivées ;
les paquets de semences (30) selon l'une quelconque des revendications 1 à 11, comprenant des semences de culture (322) destinées à être cultivées en leur sein ;
une étagère de culture (40) qui est disposée dans un espace de culture (100) de l'armoire (10) et sur laquelle repose le paquet de semences (30) ;
un compartiment machine (20) pourvu d'un compresseur et d'un condenseur qui mettent en œuvre un cycle frigorifique pour la régulation de la température de l'espace de culture (100).

13. Appareil de culture de plantes (1) selon la revendication 12,
dans lequel l'étagère de culture (40) comprend :
une partie d'appui (420) disposée en plusieurs exemplaires espacés les uns des autres dans la direction verticale à l'intérieur de l'armoire (10), évidée vers le bas, et sur laquelle repose le paquet de semences (30) ; et
une partie d'alimentation en eau (43, 416) formée sur la partie d'appui (420) et alimentant en eau l'intérieur du paquet de semences (30), et
dans lequel la surface inférieure de la partie en retrait (314) loge la partie d'alimentation en eau (43, 416).
